(19) Europäisches Patentamt
European Patent Office
Office européen des brevets

(11) Publication number: 0 330 990 A2

(12) # EUROPEAN PATENT APPLICATION

(21) Application number: 89103095.9

(22) Date of filing: 22.02.89

(51) Int. Cl.4: A01N 43/70 , A01N 43/54 , //(A01N43/70,43:54), (A01N43/54,43:20,37:26)

(30) Priority: 22.02.88 JP 39223/88

(43) Date of publication of application: 06.09.89 Bulletin 89/36

(84) Designated Contracting States: AT DE ES FR GB IT

(71) Applicant: KUMIAI CHEMICAL INDUSTRY CO., LTD.
4-26, Ikenohata 1-chome
Taitoh-ku Tokyo(JP)

(72) Inventor: Miyazawa, Takeshige
1205-9, Iwaname Daito-cho
Ogasaka-gun Shizuoka-ken(JP)
Inventor: Kawano, Kazuhiko
5-14, Ishigami 2-chome
Niiza-shi Saitama-ken(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

(54) **Herbicidal composition.**

(57) A herbicidal composition comprising a herbicidally effective amount of a mixture of a first active ingredient (a) and a second active ingredient (b):

(a) at least one compound selected from the group consisting of pyrimidine derivatives of the general formula (I)

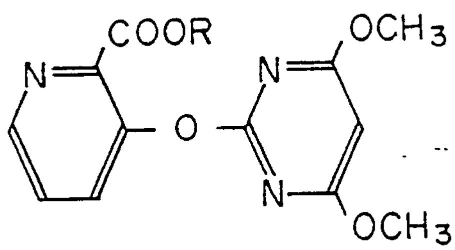

(I)

wherein R is a hydrogen atom, an alkyl group, or a cation of an alkali metal, an alkaline earth metal or an organic amine, and salts thereof, and

(b) a compound selected from the group consisting of N-methoxymethyl-2,6-diethyl-α-chloroacetanilide, 2-chloro-4-ethylamino-6-isopropylamino-1,3,5-triazine, 2-(2-chloro-4-ethylamino-1,3,5-triazine-6-yl-amino)-2-methylpropionitrile, and 2-(3,5-dichlorophenyl)-2-(2,2,2-trichloroethyl)oxirane.

The composition is useful as a herbicide for controlling a wide range of weeds which infested in corn fields.

EP 0 330 990 A2

# HERBICIDAL COMPOSITION

## BACKGROUND OF THE INVENTION

### Field of the invention

The present invention relates to a herbicidal composition.

### Description of Prior Art

Some pyrimidine derivatives are known to have herbicidal activity as described in Japanese Patent Application Laid-Open (Kokai) No. 64-84 laid open to public inspection on January 5, 1989. On the other hand, various compounds such as N-methoxymethyl-2,6-diethyl- α-chloro-acetanilide (ALACHLOR), 2-chloro-4-ethylamino-6-isopropylamino-1,3,5-triazine (ATRAZINE), 2-(2-chloro-4-ethyl-amino-1,3,5-triazin-6-yl-amino)-2-methylpropionitrile (CYANAZINE), and 2-(3,5-dichloro-phenyl)-2-(2,2,2-trichloro-ethyl)oxirane (TRIDIPHANE) have been used as herbicides for weeds.

A variety of herbicides have already been used for controlling weeds. However, there is increasing demand for herbicides which have high, long-residual herbicidal activity and wide spectrum for controlling weeds and which are highly safe to crops since there are many kinds of weeds to be controlled and the weeds germinate considerably for a long period of time.

## SUMMARY OF THE INVENTION

As a result of intensive research with view to developing new herbicides, it has now been found a specified pyrimidine derivative and another specified compound when used in combination can selectively control a wide range of weeds, especially those weeds which infested in corn fields, and that there is observed synergism in the herbicidal activity with low dosages.

Therefore, the present invention provides a herbicidal composition comprising a herbicidally effective amount of a mixture of

(a) at least one compound selected from the group consisting of pyrimidine derivatives of the general formula (I)

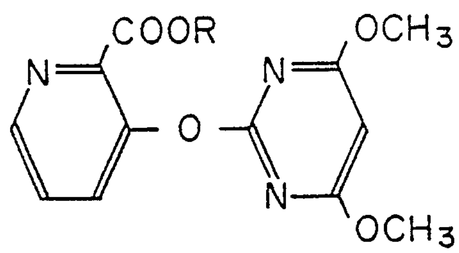

(I)

wherein R is a hydrogen atom, an alkyl group, or a cation of an alkali metal, an alkaline earth metal or an organic amine, and salts thereof, and

(b) a compound selected from the group consisting of N-methoxymethyl-2,6-diethyl-α-chloroacetanilide, 2-chloro-4-ethylamino-6-isopropylamino-1,3,5-triazine, 2-(2-chloro-4-ethylamino-1,3,5-triazin-6-yl-amino)-2-methylpropionitrile, and 2-(3,5-dichlorophenyl)-2-(2,2,2-trichloroethyl)oxirane.

The herbicidal composition of the present invention can effectively control various weeds such as grass weeds, e.g., barnyardgrass (Echinochloa crus-galli P. Beauv.), green foxtail (Setaria viridis (L.) P. Beauv.), crabgrass (Digitaria sanguinalis (L.) Scop. ssp. pectiniformis Henrard), Johnsongrass (Sorghum halepense - (L.) Pers.), goosegrass (Eleusine indica (L.) Gaertn.), Bermudagrass (Cynodon dactylon (L.) Pers.), finebristled burr (Cenchrus brownii Roem. et Schult.), millet (Panicum miliaceum L.), signalgrass (Brachiaria platypylla (Grieseb.) Nash), sprangletop (Leptochloa dubia (H.B.K.) Nees), quackgrass (Agropyron repens - (L.) P. Beauv.), etc., and broad leaf weeds, e.g., blite (Amaranthus lividus L.), lambsquarters (Chenopodium album L.), cocklebur (Xanthium strumarium L. ssp. strumarium), velvetleaf (Abutilon theophrasti Medik.), (sicklepod (Casia tora L.), field morningglory (Convolvulus arvensis L.), shepherd's-purse (Capsella bursa-pastoris (L.) Medik.), purselane (Portulaca oleracea L.), nightshade (Solanum nigrum L.), sowthistle (Sonchus oleraceus L.), Polygonum blumei Meissn., wild sunflower (Helianthus sp.), blackjack (Bidens pilosa L.), morningglory (Ipomoea acuminata (Vahl) Roem. et Schult.), etc. In particular, the herbicidal composition of the present invention is useful for selectively controlling a wide range of weeds which infested in corn fields. The herbicidal composition of the present invention exhibits synergistically improved herbicidal activity as compared with the respective active ingredients used alone. Moreover, the herbicidal composition of the present invention is effective at low dosage.

## DETAILED DESCRIPTION OF THE INVENTION

The herbicidal composition of the present invention includes two active ingredients (a) and (b). The first active ingredient (a) is a compound selected from the group consisting of pyrimidine derivative of the general formula (I)

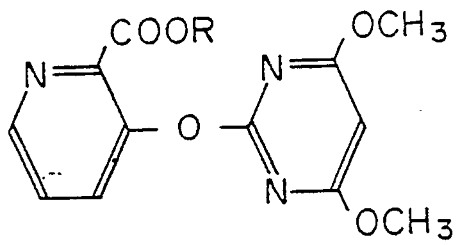

(I)

wherein R is a hydrogen atom, an alkyl group, or a cation of an alkali metal, an alkaline earth metal or an organic amine, and salts thereof.

The second active ingredient (b) of the herbicidal composition of the present invention is a compound selected from the group consisting of N-methoxymethyl-2,6-diethyl-α-chloroacetanilide, 2-chloro-4-ethylamino-6-iso-propylamino-1,3,5-triazine, 2-(2-chloro-4-ethylamino-1,3,5-triazin-6-yl-amino)-2-methylpropionitrile, and 2-(3,5-dichlorophenyl)-2-(2,2,2-trichloroethyl)oxirane.

Specific examples of the pyrimidine derivatives and their salts used as component (a) include those described in Table 1 below.

TABLE 1

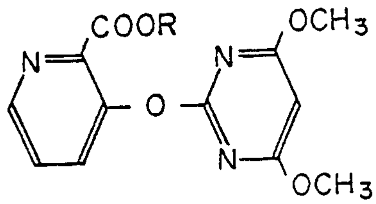

| Compound Number | R | Melting Point or Refractive Index |
|---|---|---|
| 1 | H | 120 - 121 °C |
| 2 | $CH_3$ | 65 - 66 °C |
| 3 | $C_2H_5$ | 1.5389 $n_D^{20}$ |
| 4 | $C_3H_7$ | 1.5328 $n_D^{20}$ |
| 5 | i-$C_3H_7$ | 69 - 70 °C |
| 6 | $C_4H_9$ | 1.5320 $n_D^{20}$ |
| 7 | Na | 214 - 217 °C |
| 8 | K | 232 - 234 °C |
| 9 | 1/2Ca | 198 - 200 °C |
| 10 | i-$C_3H_7$NH | 1.5405 $n_D^{20}$ |

Of the above compounds, Compounds (2) is particlularly preferred.
These compounds may be used alone or two or more of them may be used in combination.
The second active ingredient (b) is selected from the following compounds.

ALACHLOR

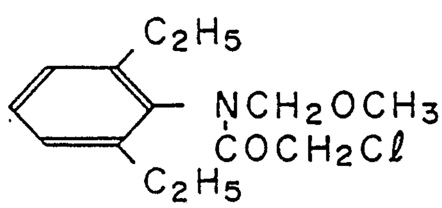

ATRAZINE

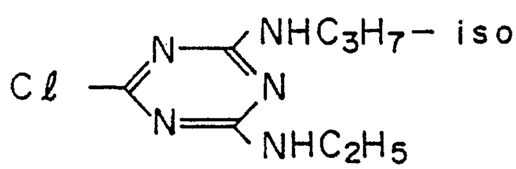

CYANAZINE 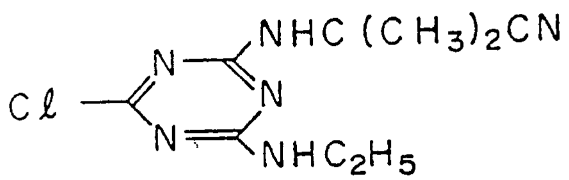

TRIDIPHANE 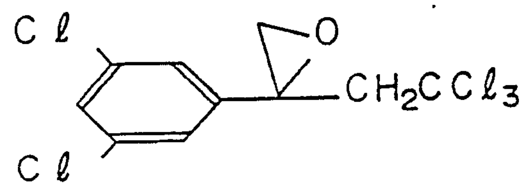

The above second ingredients may be used alone or in combination with each other.

Although the herbicidal composition of the present invention may be used as is without formulation, it is usually preferred to use it after compounding therewith conventionally used carriers, surfactants, dispersants, auxiliary agents, or the like additives and formulating the mixture into various dosage forms such as wettable powders, granules, emulsifiable concentrates, micro-granules or suspensions.

Suitable examples of the carrier used upon formulation include solid carriers such as calcium carbonate, talc, bentonite, clay, kaolin, diatomaceous earth, white carbon, vermiculite, slaked lime, silica sand, ammonium sulfate and urea, liquid carriers such as isopropyl alcohol, xylene, cyclohexanone, methylnaphthalene, acetone, isophorone, dimethyl sulfoxide, acetonitrile, vegetable oils and water, and the like.

Suitable examples of the surfactants and dispersants include alcohol sulfates, alkylaryl sulfonates, lignin sulfonates, polyoxyethylene glycol ethers and polyoxyethylene sorbitan monoalkylates.

Suitable examples of the auxiliary agents include carboxymethylcellulose, polyethylene glycol and gum arabic.

The formulated herbicidal composition of the present invention may be applied as is or dispersed after diluting it in water or a like solvent in an appropriate concentration.

The herbicidal composition of the present invention can be used together with one or more of other herbicides, insecticides, fungicides, plant growth regulators and fertilizers.

The active ingredients (a) and (b) in the herbicidal composition of the present invention can be mixed in ratios which can vary within a wide range. Generally, the ratio of the active ingredient (a) to the active ingredient (b) may vary from 1 : 0.1 to 1: 300 by weight, preferably 1: 0.5 to 1: 200 by weight, and more preferably 1 : 1 to 1 : 50. More specifically, when the second active ingredient (b) is ALACHLOR, the ratio (a) : (b) is 1 : 0.5 to 1: 200 by weight, particularly 1: 0.5 to 1: 50 by weight. When ATRAZINE or CYANAZINE is used as the second active ingredient, the ratio (a) : (b) is 1 : 0.5 to 1 : 100 by weight, particularly 1 : 0.5 to 1 : 50 by weight. The ratio (a) : (b) is 1 : 0.5 to 1 : 50 by weight, particularly 1 : 0.5 to 1 : 40 by weight when TRIDIPHANE is used as the second active ingredient.

The dosage of the herbicidal composition of the present invention varies depending upon various factors such as kind of weeds to be controlled, kind of crops, climatic conditions, forms of formulations, mixing ratios of the active ingredients, methods of application and timing of application. Usually, the dosage of 1 to 400 g/10 ares is preferred.

Hereinafter, the present invention will be described in greater detail with reference to examples which are described by way of example and should not be construed as limiting the present invention in any way. In the examples, all percentages are by weight unless otherwise indicated specifically.

EXAMPLE 1 Wettable Powder

Five percents (5%) of Compound (1), 25% of ATRAZINE, 0.5% of EMAL 810 (trademark for lauryl sulfate produced by KAO CORPORATION), 0.5% of DEMOL N (trademark for naphthalene-sulfonic acid-formaldehyde condensate produced by KAO CORPORATION), 20% of KUNILITE 201 (trademark for diatomaceous earth produced by KUNIMINE CO., LTD.), and 49% of ZEEKLITE CA (trademark for silica sand produced by ZEEKLITE CO., LTD.) were mixed uniformly and ground to form wettable powder.

EXAMPLE 2 Emulsifiable Concentrate

Two percents (2%) of Compound (2), 20% of ALACHLOR, 20% of cyclohexanol, 11% of polyoxyethylene alkyl aryl ether, 4% of calcium alkylbenzenesulfonate and 32% of methylnaphthalene were dissolved uniformly to form an emulsifiable concentrate.

EXAMPLE 3 Granules

One percent (1%) of Compound (2), 4% of TRIDIPHANE, 2% of lauryl alcohol sulfate sodium salt, 5% of sodium ligninsulfonate, 2% carboxymethylcellulose, and 86% of clay were mixed and ground uniformly. Water (20 parts by weight) was added to 100 parts by weight of the resulting mixture and the mixture obtained was formulated into grains of a size of 14 to 32 mesh using an extruder type granulator, and the grins were dried to form granules.

EXAMPLE 4 Suspension

Two percents (2%) of Compound (2), 15% of CYANAZINE, 10% of ethylene glycol, 5% of polyethylene glycol alkyl aryl ether and 68% of water were mixed and ground uniformly to form a suspension.

Next, the effect of the herbicidal composition of the present invention will de described concretely with reference to test examples.

## TEST EXAMPLES

In the following test examples, there are used abbreviation as shown below.

"Pan" : Panicum miliaceum L.
"Ech" : Echinochloa crus-galli P. Beauv.,
"Set" : Setaria viridis (L.) P. Beauv.
"Ipo" : Ipomoea acuminata (Vahl) Roem. et Schult.
"Xan" : Xanthium strumarium L. ssp. strumarium
"Dig" : Digitaria sanguinalis (L.) Scop. ssp. pectiniformis Henrard,
"Cyn" : Cynodon dactylon (L.) Pers.
"Ele" : Eleusine indica (L.) Gaertn.
"Bra" : Brachiaria platypylla (Griseb.) Nash
"Zea" : Zea mays

TEST EXAMPLE 1

In a pot (surface area: 800 $cm^2$ filled with soil were sown seeds of Pan, Ech, Set and Zea and soil was put thereon in a thickness of 0.5 to 1 cm. The pot was incubated in a glass room kept at 18 to 25°C and the plants were allowed to grow until Zea reached a four-leaf stage and the weeds (Pan, Ech and Set) reached 2.5- to 3.5-leaf stage. Thereafter, a predetermined amount of wettable powder prepared according to Example 1 was diluted with water and the resulting composition was sprayed on the surface of the leaves and stems of the plants in amounts of 100 liters per 10 ares using a small atomizer. On day 25, was made examination on the herbicidal activity and phytotoxicity of the test compositions.

The herbicidal activity was obtained by measuring the weight of intact plants above the ground and calculating growth control ratio (%) as defined by the following formula:

Growth Control Ratio (%)

$$= \left(1 - \frac{\text{Weight of Intact Plant Above Ground in Treated Plot}}{\text{Weight of Intact Plant Above Ground in Untreated Plot}}\right) \times 100$$

The results obtained are shown in Table 2 below.

TABLE 2

| Test Compound | Amount of Active Ingredient Treated (g/10a) | Herbicidal Activity | | | Phytotoxicity Zea |
|---|---|---|---|---|---|
| | | Pan | Ech | Set | |
| Compound (1) | 20 | 98 | 73 | 95 | None |
| | 10 | 83 | 50 | 78 | None |
| | 5 | 60 | 38 | 60 | None |
| ALACHLOR | 200 | 85 | 38 | 90 | None |
| | 100 | 15 | 18 | 48 | None |
| | 50 | 0 | 3 | 25 | None |
| Compound (1) and ALACHLOR | 5 + 50 | 93 | 58 | 100 | None |
| | 5 + 100 | 98 | 75 | 100 | None |
| | 5 + 200 | 100 | 95 | 100 | None |
| | 10 + 50 | 100 | 73 | 100 | None |
| | 10 + 100 | 100 | 88 | 100 | None |
| | 10 + 200 | 100 | 100 | 100 | None |
| | 20 + 50 | 100 | 100 | 100 | None |
| | 20 + 100 | 100 | 100 | 100 | None |
| | 20 + 200 | 100 | 100 | 100 | None |

The results in Table 2 above show that the herbicidal composition of the present invention exhibits synergistic improvement in the herbicidal activity and has no phytotoxicity on the crop tested.

## TEST EXAMPLE 2

In a pot (surface area: 800 $cm^2$ filled with soil were sown seeds of Ech, Set, Ipo, Xan and Zea and soil was put thereon in a thickness of 0.5 to 1 cm. The pot was incubated in a glass room kept at 18 to 25 °C and the plants were allowed to grow for 12 days until Zea reached a 3,7-leaf stage and the weeds (Ech, Set, Ipo and Xan) reached 3- to 4-leaf stage. Thereafter, a predetermined amount of wettable powder prepared according to Example 1 was diluted with water and the resulting composition (containing 0.1% of a spreader) was sprayed uniformly on the surface of the leaves and stems of the plants in amounts of 100 liters per 10 ares using a small sprayer. On day 33 after the treatment was made examination on the herbicidal activity and phytotoxicity of the test compositions.

The herbicidal activity in terms of growth control ratio (%) was obtained in the same manner as in Test Example 1.

The results obtained are shown in Table 3 below.

TABLE 3

| Test Compound | Amount of Active Ingredient Treated (g/10a) | Herbicidal Activity Ech | Set | Ipo | Xan | Phyto-toxicity Zea |
|---|---|---|---|---|---|---|
| Compound (1) | 20 | 98 | 98 | 48 | 88 | None |
| | 10 | 95 | 93 | 23 | 43 | None |
| | 5 | 90 | 88 | 18 | 30 | None |
| ATRAZINE | 200 | 93 | 40 | 98 | 95 | None |
| | 100 | 58 | 18 | 83 | 68 | None |
| | 50 | 35 | 3 | 38 | 23 | None |
| Compound (1) and ATRAZINE | 5 + 50 | 100 | 95 | 88 | 90 | None |
| | 5 + 100 | 100 | 100 | 100 | 100 | None |
| | 5 + 200 | 100 | 100 | 100 | 100 | None |
| | 10 + 50 | 100 | 100 | 95 | 100 | None |
| | 10 + 100 | 100 | 100 | 100 | 100 | None |
| Compound (1) and ATRAZINE | 10 + 200 | 100 | 100 | 98 | 100 | None |
| | 20 + 50 | 100 | 100 | 100 | 100 | None |
| | 20 + 100 | 100 | 100 | 100 | 100 | None |
| | 20 + 200 | 100 | 100 | 100 | 100 | None |

TABLE 3 (Continued)

The results in Table 3 above show that the herbicidal composition of the present invention exhibits synergistic improvement in the herbicidal activity as compared with the respective active ingredient used alone and has no phytotoxicity on the crop tested.

TEST EXAMPLE 3

In a pot (surface area: 800 $cm^2$ filled with soil were sown seeds of Ech, Ele, Set, Bra and Zea and soil was put thereon in a thickness of 0.5 to 1 cm. The pot was placed outdoors and plants were allowed to grow until Zea reached a 4-leaf stage and the weeds (Ech, Ele, Set and Bra) reached 2.5- to 4-leaf stage. Thereafter, a predetermined amount of wettable powder prepared according to Example 1 was diluted with

water and the resulting composition (containing 0.1% of a spreader) was sprayed uniformly on the surface of the leaves and stems of the plants in amounts of 100 liters per 10 ares using a small sprayer. On day 25 after the treatment was made examination on the herbicidal activity and phytotoxicity of the test compositions.

The herbicidal activity in terms of growth control ratio (%) was obtained in the same manner as in Test Example 1.

The results obtained are shown in Table 4 below.

TABLE 4

| Test Compound | Amount of Active Ingredient Treated (g/10a) | Herbicidal Activity | | | | Phytotoxicity Zea |
|---|---|---|---|---|---|---|
| | | Ech | Ele | Set | Bra | |
| Compound (2) | 20 | 93 | 95 | 85 | 95 | None |
| | 10 | 60 | 83 | 53 | 78 | None |
| | 5 | 43 | 75 | 35 | 48 | None |
| CYANAZINE | 100 | 55 | 63 | 30 | 48 | None |
| | 50 | 13 | 20 | 5 | 8 | None |
| Compound (2) and CYANAZINE | 2.5 + 50 | 78 | 100 | 60 | 85 | None |
| | 2.5 + 100 | 100 | 100 | 93 | 98 | None |
| | 5 + 50 | 98 | 100 | 95 | 95 | None |
| | 5 + 100 | 100 | 100 | 100 | 100 | None |
| | 10 + 50 | 100 | 100 | 98 | 100 | None |
| | 10 + 100 | 100 | 100 | 100 | 100 | None |

The results in Table 4 above show that the herbicidal composition of the present invention exhibits synergistic improvement in the herbicidal activity as compared with the respective active ingredient used alone and has no phytotoxicity on the crop tested.

## TEST EXAMPLE 4

In a pot (surface area: 800 $cm^2$ filled with soil were sown seeds of Ech, Dig, Set, Pan, Cyn and Zea and soil was put thereon in a thickness of 0.5 to 1 cm. The pot was incubated in a glass room kept at 15 to 25 °C and the plants were allowed to grow for 3 weeks days until Zea reached a 4-leaf stage and the weeds (Ech, Dig, Set, Pan and Cyn) reached 3- to 4-leaf stage. Thereafter, a predetermined amount of wettable powder prepared according to Example 1 was diluted with water and the resulting composition (containing 0.1% of a spreader) was sprayed uniformly on the surface of the leaves and stems of the plants in amounts of 100 liters per 10 ares using a small sprayer. On day 30 after the treatment was made examination on the herbicidal activity and phytotoxicity of the test compositions.

The herbicidal activity in terms of growth control ratio (%) was obtained in the same manner as in Test Example 1.

The results obtained are shown in Table 5 below.

TABLE 5

| Test Compound | Amount of Active Ingredient Treated (g/10a) | Herbicidal Activity Ech | Ech | Set | Ipo | Xan | Phyto-toxicity Zea |
|---|---|---|---|---|---|---|---|
| Compound (2) | 1 | 13 | 22 | 48 | 35 | 17 | None |
| | 2 | 26 | 35 | 69 | 73 | 36 | None |
| | 4 | 41 | 43 | 84 | 83 | 41 | None |
| | 6 | 64 | 51 | 94 | 98 | 60 | None |
| TRIDIPHANE | 10 | 31 | 40 | 22 | 0 | 23 | None |
| | 20 | 66 | 86 | 54 | 3 | 62 | None |
| | 40 | 85 | 92 | 95 | 8 | 79 | None |
| Compound (2) and TRIDIPHANE | 1 + 10 | 58 | 82 | 88 | 56 | 49 | None |
| | 1 + 20 | 89 | 100 | 97 | 65 | 83 | None |

TABLE 5(Continued)

| Test Compound | Amount of Active Ingredient Treated (g/10a) | Herbicidal Activity Ech | Ech | Set | Ipo | Xan | Phyto-toxicity Zea |
|---|---|---|---|---|---|---|---|
| Compound (2) and TRIDIPHANE | 1 + 40 | 100 | 100 | 100 | 71 | 100 | None |
| | 2 + 10 | 74 | 89 | 96 | 85 | 70 | None |
| | 2 + 20 | 98 | 100 | 100 | 92 | 98 | None |
| | 2 + 40 | 100 | 100 | 100 | 96 | 100 | None |
| | 4 + 10 | 85 | 96 | 100 | 93 | 94 | None |
| | 4 + 20 | 100 | 100 | 100 | 98 | 100 | None |
| | 4 + 40 | 100 | 100 | 100 | 100 | 100 | None |

The results in Table 5 above show that the herbicidal composition of the present invention exhibits synergistic improvement in the herbicidal activity as compared with the respective active ingredient used alone and has no phytotoxicity on the crop tested.

## Claims

1. A herbicidal composition comprising a herbicidally effective amount of a mixture of a first active ingredient (a) and a second active ingredient (b):

(a) at least one compound selected from the group consisting of pyrimidine derivatives of the general formula (I)

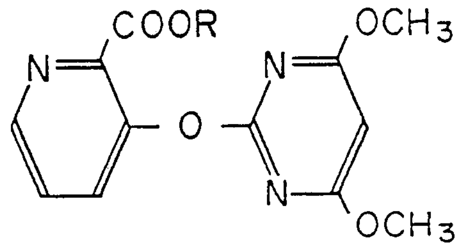

(I)

wherein R is a hydrogen atom, an alkyl group, or a cation of an alkali metal, an alkaline earth metal or an organic amine, and salts thereof, and

(b) a compound selected from the group consisting of N-methoxymethyl-2,6-diethyl-α-chloroacetanilide, 2-chloro-4-ethylamino-6-isopropylamino-1,3,5-triazine, 2-(2-chloro-4-ethylamino-1,3,5-triazine-6-yl-amino)-2-methylpropionitrile, and 2-(3,5-dichlorophenyl)-2-(2,2,2-trichloroethyl)oxirane.

2. A herbicidal composition as claimed in Claim 1, wherein said second active ingredient (b) is N-methoxymethyl-2,6-diethyl-α-chloroacetanilide.

3. A herbicidal composition as claimed in claim 1, wherein said second active ingredient (b) is 2-chloro-4-ethylamino-6-isopropylamino-1,3,5-triazine.

4. A herbicidal composition as claimed in claim 1, wherein said second active ingredient is 2-(2-chloro-4-ethylamino-1,3,5-triazine-6-yl-amino)-2-methylpropionitrile.

5. A herbicidal composition as claimed in claim 1, wherein said second active ingredient is 2-(3,5-dichlorophenyl)-2-(2,2,2-trichloroethyl)oxirane.

6. A herbicidal composition as claimed in Claim 1, wherein said first active ingredient and said second active ingredient are present in a proportion of (a) : (b) being 1 : 0.1 to 1 : 300 by weight.

7. A herbicidal composition as claimed in Claim 2, wherein said first active ingredient and said second active ingredient are present in a proportion of (a) : (b) being 1 : 0.5 to 1 : 200 by weight.

8. A herbicidal composition as claimed in Claim 3, wherein said first active ingredient and said second active ingredient are present in a proportion of (a) : (b) being 1 : 0.5 to 1 : 100 by weight.

9. A herbicidal composition as claimed in Claim 4, wherein said first active ingredient and said second active ingredient are present in a proportion of (a) : (b) being 1 : 0.5 to 1 : 100 by weight.

10. A herbicidal composition as claimed in Claim 5, wherein said first active ingredient and said second active ingredient are present in a proportion of (a) : (b) being 1 : 0.5 to 1 : 50 by weight.